# FASCICULE DE BREVET EUROPEEN

(11) **EP 3 194 762 B1**
(45) Date de publication et mention de la délivrance du brevet: **13.11.2019**
(21) Numéro de dépôt: 15766921.9
(22) Date de dépôt: 04.09.2015
(51) Int. Cl.: F03B 13/22, B63B 39/03

(54) **DISPOSITIF ET PROCEDE POUR STRUCTURE SOUMISE A OSCILLATIONS**
VORRICHTUNG UND VERFAHREN FÜR SCHWINGUNGSBEWEGUNGEN AUSGESETZTER STRUKTUR
DEVICE AND METHOD FOR A STRUCTURE SUBJECT TO OSCILLATING MOVEMENTS

(30) Priorité: 18.09.2014 FR 1458824; 18.09.2014 FR 1458825
(43) Date de publication de la demande: 26.07.2017
(73) Titulaire: Geps Techno, 44600 Saint-Nazaire (FR)
(72) Inventeur: LONGEROCHE, Jean-Luc, F-44600 Saint-Nazaire (FR); MAGALDI, Philippe, F-44600 Saint-Nazaire (FR)
(74) Mandataire: Pichat, Thierry
(86) Numéro de dépôt international: PCT/FR2015/052356
(87) Numéro de publication internationale: WO 2016/042235

(56) Documents cités:
- EP-A1- 0 059 652
- GB-A- 996 276
- GB-A- 1 358 207
- US-A- 3 322 090
- US-A- 3 452 705
- US-A- 4 009 396

## Description

L'invention se rapporte à un dispositif agissant sur une structure adaptée à subir au moins un mouvement d'inclinaison d'un premier bord sur un deuxième bord (voir par exemple GB 996 276 A).

Dans ce domaine, et sur une structure flottante, telle un navire de surface, des problèmes d'amortissements effectifs du mouvement se posent et/ou de production d'énergie si des turbines sont prévues. En effet, la circulation du liquide, censée avoir un effet sur le mouvement de la structure en agissant à contretemps ou à temps différé de celui de la houle, est bien souvent inappropriée.

L'approche suivie dans la présente demande spécifique notamment par le fait:
- de scinder un volume global en sous-volumes,
- de disposer de façon pertinente ces sous-volumes les uns par rapport aux autres,
- et de pouvoir disposer à chaque mouvement d'un premier bord sur l'autre de quasiment toute la quantité de liquide disponible sur le bord alors le plus bas.

Plus précisément, il est ainsi proposé que le dispositif comprenne :
- au moins une chambre intermédiaire qui est allongée entre les premier et deuxième bords,
- un premier et un deuxième bassins latéraux communiquant avec la (les) chambre(s) intermédiaire(s) pour assurer des entrées et sorties de liquide, les bassins latéraux comprenant chacun une paroi qui les délimitent extérieurement et étant situés vers deux extrémités de la chambre intermédiaire, respectivement vers les premier et deuxième bords, chaque bassin latéral comprenant :
   - une partie supérieure disposée de manière qu'elle reçoive le liquide sensiblement dans l'alignement de la direction d'allongement de de la chambre intermédiaire qui l'alimente,
   - et une partie inférieure (située donc plus bas) qui communique avec la partie supérieure, chacune des parties supérieure et inférieure communiquant avec la (les) chambre(s) intermédiaire(s) pour les entrées et sorties de liquide.

Ainsi il y aura:
- une circulation de liquide de haut en bas dans les bassins latéraux,
- et la présence latéralement d'un volume qui reçoit le liquide sensiblement dans le prolongement de la direction d'allongement de la chambre intermédiaire, évitant ainsi un coude, ou un changement notable de direction du fluide d'alimentation du bassin latéral considéré.

Utiliser, comme prévue ci-après, une chambre intermédiaire (partiellement) remplie d'un liquide à surface libre permettra notamment de profiter de la technologie d'amortissement de roulis dite « FLUME », dans sa composante SIRE ou G-SIRE.

Les bassins latéraux pourront être équipés de turbines.

Pour favoriser encore la circulation du liquide, l'invention prévoit que chaque communication entre la partie supérieure du bassin latéral correspondant et la chambre intermédiaire soit située de sorte que le liquide canalisé par la chambre intermédiaire vers l'un desdits bassins :
- y entre essentiellement tangentiellement à la partie de paroi qui délimite extérieurement ce bassin latéral, à l'entrée dudit bassin,
- et tourbillonne ainsi autour d'un axe vertical, en s'évacuant vers la partie inférieure dudit bassin.

Egalement à cette fin, il est proposé que chaque paroi qui délimite extérieurement le bassin latéral correspondant puisse être, au moins vers ladite entrée, enroulée sensiblement en spirale autour dudit axe vertical, quand le dispositif est à l'horizontal.

Il sera par ailleurs préféré que les communications entre les parties inférieures des bassins latéraux et la chambre intermédiaire soient pourvues de clapets anti-retour.

Equiper de tels clapets ces communications pourra avoir d'autant plus de sens que la chambre intermédiaire ne sera pas équipée de cloison de séparation, dès lors qu'alors toutes les communications entre les parties supérieure et inférieure des bassins latéraux et ladite chambre déboucheront dans cette chambre, rendant alors importantes les possibles interférences de flux entre les masses de liquide en mouvement dans un sens et en sens inverse.

En vue toutefois de favoriser une alimentation en liquide qui ne pâtisse le moins possible des rythmes de mouvements oscillants perturbés par le vent ou un état de houle, il est malgré tout proposé que soit prévue (au moins) une cloison intermédiaire dressée dans la chambre intermédiaire qu'elle séparera ainsi en un premier et un deuxième conduits de circulation dudit liquide entre les bassins latéraux, chaque bassin latéral communiquant avec les deux conduits:
- pour une entrée dudit liquide dans le bassin, par un premier passage à travers la paroi du bassin, dans sa partie supérieure, et
- pour la sortie dudit liquide du bassin, par un second passage à travers la paroi du bassin, dans sa partie inférieure.

Aspect qui peut aussi avoir son importance : gaver en liquide de manière optimisée le (chaque) bassin latéral qui reçoit la masse de liquide flux issue du basculement dans un sens (par exemple roulis du premier bord sur le deuxième), et ce y compris si les bassins latéraux comprennent des turbines de production d'énergie.

A cette fin, il est conseillé que les parties supérieure et inférieure de chaque bassin latéral communiquent entre elles par un goulot.

Prédéfinir la section de passage de ce goulot en fonction du volume du bassin latéral concerné, du volume d'eau en circulation lui parvenant, des conditions moyennes estimées du mouvement alternatif d'inclinaison censé s'appliquer permettra d'atteindre un fonctionnement moyen performant.

Toutefois, pour réguler de façon plus fine l'alimentation en liquide de la partie supérieure de chaque bassin latéral, il est proposé de faire varier la section de passage du goulot, de préférence en fonction du rendement de l'installation.

Utiliser à cette fin un diaphragme déformable ou réglable (par exemple par le pilotage d'une section variable, via un mécanisme d'ouverture/fermeture réglable) permettra d'atteindre cet objectif, de façon simple et fiable.

Dans le but de limiter les pertes de charges et les turbulences néfastes à une circulation/évacuation rapide du liquide, il est proposé d'adjoindre un circuit additionnel de fluide gazeux reliant les premier et un deuxième bassins latéraux, sans communication avec le fluide gazeux présent au-dessus de la surface libre de la chambre intermédiaire.

Le transfert du gaz opéré lors des basculements agira pour créer une surpression sur le liquide se vidant du côté du bord qui monte, ceci avec ou sans clapet.

Outre ce qui précède, a également été considérée l'implantation du dispositif sur la structure concernée. Son encombrement peut gêner, de même que sa disposition vis-à-vis du/des ponts, sur une structure par ailleurs fonctionnelle (navire de commerce, chalutier, plateforme soumise à la houle...).

Aussi est-il proposé, le dispositif étant considéré à l'horizontale:
- soit que la chambre intermédiaire et les bassins latéraux présentent un fond situé sensiblement au même niveau, quand le dispositif est à l'horizontal,
- soit, si l'espace le permet, que:
   -- la chambre intermédiaire présente un fond situé à un premier niveau,
   -- les bassins latéraux présentent chacun un fond situé à un second niveau,
   -- et le premier niveau est situé plus haut que le second niveau, de sorte que le liquide remonte pour passer de la partie inférieure d'un dit bassin latéral dans la chambre intermédiaire, lors d'un basculement.

Et pour permettre d'ajuster la période propre du bassin en permettant d'augmenter artificiellement la longueur d'onde de résonance de la surface libre, sans créer de déphasage supplémentaire, la chambre intermédiaire pourra présenter des parois latérales dressées pourvues d'appendices saillants en face interne desdites parois latérales, en contact avec le liquide.

A noter également, comme déjà noté, l'intérêt qu'il pourrait y avoir à équiper le dispositif d'au moins une première et une deuxième turbines disposées dans la partie supérieure des premier et un deuxième bassins latéraux, respectivement, chaque turbine étant de préférence une turbine à axe vertical, structure au repos. En liaison avec une production d'énergie électrique, on apportera ainsi une solution pertinente à des problèmes de perte de charge (induisant des problèmes de rendement) et de construction (notamment de compacité).

Outre le dispositif qui vient d'être présenté, est aussi concerné un procédé agissant sur une structure subissant au moins un mouvement d'inclinaison d'un bord sur un autre bord, caractérisé en ce qu'à bord de la structure, dans au moins une chambre intermédiaire allongée, centrée suivant une direction d'allongement, on fait circuler on fait circuler un liquide pour l'amener vers l'un et l'autre desdits bords, dans des premier et deuxième bassins latéraux qu'on alimente en liquide par des canaux d'entrée respectivement situés sensiblement dans l'alignement de la direction d'allongement de la chambre intermédiaire.

En outre, et de préférence :
- vers chacune des extrémités que la chambre intermédiaire présente suivant sa direction d'allongement, on disposera la partie supérieure du bassin latéral avec lequel la chambre intermédiaire communiquera pour l'alimenter en liquide,
- et on fera ensuite s'évacuer ce liquide, en le renvoyant vers ladite chambre intermédiaire à travers un goulot séparant ladite partie supérieure alimentée en liquide d'une partie inférieure dudit bassin latéral.

On pourra par ailleurs vouloir associer finement une limitation de basculement d'un navire et une production d'énergie électrique, ce qui est assez complexes à mettre en œuvre.

C'est malgré tout à cette fin que l'invention propose :
- que sur le navire à stabiliser on dispose donc d'un liquide de travail pouvant y circuler suivant un chemin, en générant un couple de rappel afin de compenser un effet de vagues ou de houle sur ledit navire,
- le dispositif précité comprenant alors :
   -- au moins un alternateur lié fonctionnellement auxdites turbines,
   -- et des moyens électrotechniques de pilotage de l'énergie générée par la turbine ou l'alternateur, de façon à pouvoir favoriser la stabilité du navire, au moins vis-à-vis dudit basculement, par rapport à la production de l'alternateur ou de la turbine.

Autrement dit, il est alors conseillé:
- pendant que le navire bascule sous l'action de vagues ou d'une houle, de faire circuler dans ledit navire un liquide qui va générer un couple de rappel créant un amortissement de l'effet des vagues ou de la houle,
- et, pour la production d'électricité, de disposer dans le navire au moins une turbine placée sur le chemin de circulation du liquide et reliée à au moins un alternateur,
- avec pour particularité, par rapport à l'énergie potentielle disponible à un moment donné, de piloter ou contrôler électro-techniquement l'énergie mécanique générée par la turbine ou l'énergie électrique tirée de l'alternateur.

Ainsi, a priori sans agir sur une limitation du débit, ou de la quantité disponible de liquide de travail, donc à débit, ou quantité disponible, de liquide sensiblement constant(e), on va pouvoir favoriser la stabilité du navire, comme attendu, ou inversement, pouvoir disposer d'une réponse anti-basculement appropriée, avec une quantité d'eau variable dans le temps, à partir par exemple d'un réservoir de liquide consommable.

Est aussi concernée une structure :
- dont un mouvement d'oscillation ou basculement autour d'un axe horizontal est à amortir, cette structure étant équipée du dispositif d'amortissement, voire de production d'énergie, ci-avant présenté dans tout ou partie de ses caractéristiques,
- ou sur laquelle est mis en œuvre le procédé ci-dessus.

D'autres avantages et caractéristiques de l'invention apparaîtront à la lecture de la description suivante faite à titre d'exemple non limitatif et en référence aux dessins annexés dans lesquels :
- la figure 1 est une vue schématique partielle en perspective avec arrachement d'une partie de poupe d'un navire équipé du dispositif d'amortissement, voire de production d'énergie, imaginé;
- la figure 2 est une vue sensiblement de dessous, basculée, d'une des bassins latéraux de la figure 1, ici pourvue d'une turbine ;
- la figure 3 schématise de dessus la solution générale précédente ;
- la figure 4 schématise de côté une solution avec un circuit additionnel de fluide gazeux ;
- les figures 5 (côté) et 6,7 (dessus) schématisent encore une autre variante à paroi intermédiaire axiale (figure 6) ou inclinée angulairement (figure 7), et
- les figures 8,9 schématisent de côté des variantes à fonds décalés et à un (figure 8) ou plusieurs bassins (figure 9) ;
- et les figures 10,11 schématisent de dessus la présence d'appendices en face interne des parois latérales de la chambre intermédiaire.

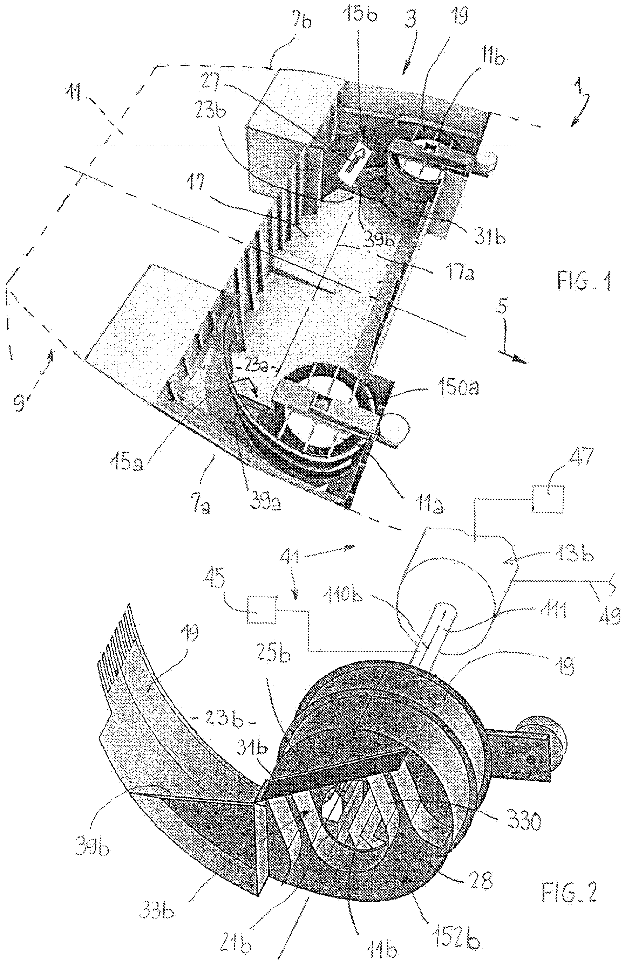

La figure 1 schématise donc une zone de la partie arrière d'un navire de surface 1 équipé d'un dispositif 3 qui a pour but d'amortir les mouvements de ce navire autour d'un axe horizontal.

Dans les exemples des figures 1-7, le dispositif 3 sert aussi de dispositif de production d'énergie électrique, du fait de la présence de première et deuxième turbines 11a,11b disposées respectivement vers les premier et deuxième bords 7a,7b. Chaque turbine est couplée à un alternateur 13a,13b propre à fonctionner en génératrice. De préférence, les turbines seront montées pour tourner toujours dans le même sens.

Mais ces turbines (et donc les alternateurs) peuvent être omis(es).

Reste que le navire 1, adapté pour avancer ici dans la direction 5, est un exemple de structure adaptée à subir au moins un mouvement oscillant entre les bords 7a,7b, ici opposés, typiquement sous l'effet des vagues et/ou de la houle. Le navire 1 comprend ici une coque 9 et un pont 11. Une forme autre de structure pourrait convenir : plateforme, bouée....

Le dispositif 3 comporte un premier et un deuxième bassins latéraux 15a,15b communiquant avec une chambre intermédiaire 17. Ces bassins latéraux sont situés vers deux extrémités de la chambre, respectivement vers les premier et deuxième bords 7a,7b. Ils comprennent chacun une paroi périphérique 19 qui les délimitent extérieurement.

La chambre 17 est partiellement remplie d'un liquide 18 à surface libre, qui peut être de l'eau, du carburant tel fuel ou gas-oil ou un liquide plus dense, pour profiter d'un effet d'inertie. La chambre intermédiaire 17 est allongée dans une direction 17a, sensiblement horizontale sur les illustrations, structure au repos, entre les première et deuxième turbines. Dans ce cas, les bassins latéraux sont aussi à surface libre, de préférence.

La direction 17a est dans l'exemple de la figure 1 transversale à l'axe longitudinal d'avance, ici la direction 5, de la structure ou du navire considéré.

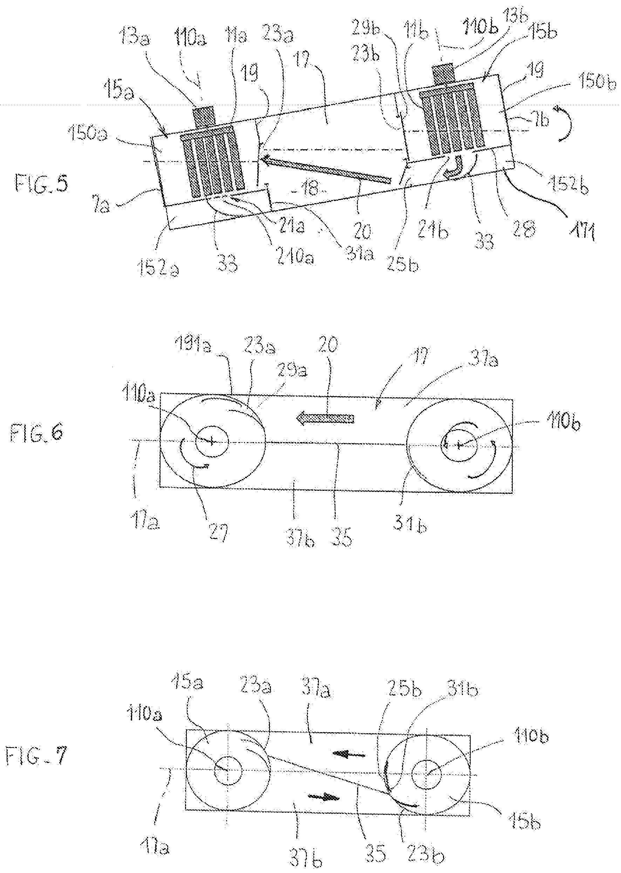

Pour favoriser rendement, praticité de construction et compacité, chaque bassin latéral comprend (voir figures 1,5 notamment):
- une partie supérieure 150a,150b pour recevoir le liquide arrivant de la chambre 17, via l'entrée 23a ou 23b,
- et une partie inférieure 152a,152b qui communique, en 21a,21b, avec la partie supérieure et avec la chambre 17, pour les sorties de liquide, respectivement en 25a,25b.

Si les turbines 11a,11b existent, on les dispose dans la partie supérieure correspondante des bassins latéraux 15a,15b, respectivement.

Les entrées respectives 23a ou 23b de liquide dans la partie supérieure 150a,150b (qui lui correspond) sont situées de telle sorte que le liquide 18 soit reçu (voir niveau indiqué figure 5 notamment en traits mixtes) sensiblement dans l'alignement de la direction d'allongement 17a de la chambre intermédiaire ; flèche 20. Ainsi, on évitera les coudes et autres changement de direction imposés au flux de liquide, limitant ainsi les pertes de charge, voire les à-coups. En pratique, il est conseillé comme figure 1 que les canaux d'entrée 23a,23b soient respectivement situés sensiblement dans l'alignement, ou prolongement axial, de la direction (axe) d'allongement 17a.

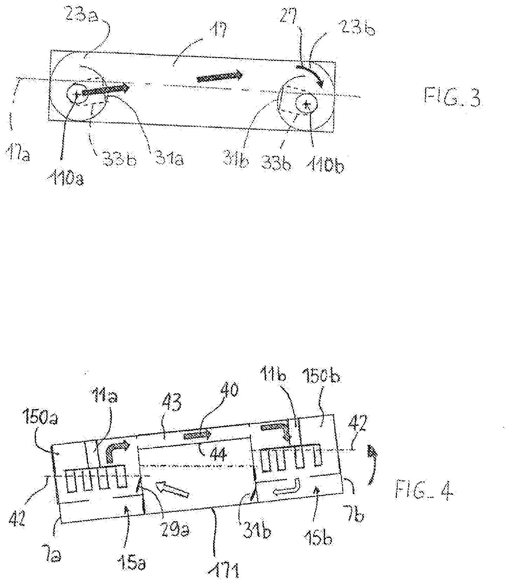

On pourra ainsi en particulier prévoir, comme illustré et pour encore limiter les pertes de charge, que chaque communication entre la partie supérieure 150a ou 150b du bassin latéral correspondant et la chambre 17 soit située de sorte que le liquide issu de la chambre pénètre essentiellement tangentiellement, et dans l'exemple en périphérie, dans le bassin latéral en contrebas (flèche 27 figures 3,6).

Ainsi, en s'évacuant vers la partie inférieure du bassin concerné, à travers le passage 21a ou 21b, puis vers la chambre, le flux tourbillonnera suivant un vortex d'axe vertical (110a ou 110b), en entrainant au passage (si elle existe) la turbine, sensiblement tangentiellement, dans son sens de rotation.

Sur différentes figures (1,2,3 notamment), on voit d'ailleurs nettement que chaque paroi 19 qui délimite extérieurement le bassin latéral 15a,15b sera même favorablement, en particulier vers l'entrée du bassin, enroulée sensiblement en spirale autour du passage 21a,21b correspondant et donc de l'axe vertical associé 110a,110b. Horizontalement, l'entrée tangentielle 23a,23b dans la partie supérieure 150a,150b va ainsi en se rétrécissant au moins jusqu'à ce qu'on atteigne une partie de paroi 19 en secteur de cylindre de section circulaire.

On comprend dès lors l'intérêt à ce que, comme illustré, les communications hautes 23a,23b soient décalées latéralement vers l'extérieur et donc situées plus près de la paroi latérale considérée de la chambre intermédiaire 17, telle celle 191a que borde presque l'ouverture ou communication haute 23a sur la figure 6, tandis que les communications basses 25a,25b seront favorablement décalées latéralement vers l'intérieur et donc situées plus près de l'axe 17a, pour se rapprocher latéralement de la position ici axiale/centrée de la communication entre les parties supérieure et inférieure en cause, ici 150b et 152b.

Ainsi, on obtiendra une alimentation des bassins latéraux par le haut, de préférence tangentielle, couplée à une évacuation vers le bas où s'effectuera le retour vers la chambre de transit 17. Disposer les deux spirales, donc les deux entrées tangentielles 23a,23b, face à face, d'un même côté de l'axe 17a, comme sur la figure 3 évitera de créer un moment pouvant influer sur l'orientation des basculements autour de l'axe horizontal d'oscillation de la structure.

Dans ce cadre, on tirera aussi avantage à ce que, si elles existent, les première et deuxième turbines 11a,11b soient des turbines présentant chacune (structure 1 au repos) un axe vertical confondu avec celui précité 110a ou 110b.

En pratique, il est par ailleurs conseillé que les communications 21a,21b définissent chacune un goulot entre les parties supérieure et inférieure de chaque bassin latéral.

Certes chaque goulot 21a,21b pourra présenter une section prédéterminée, arrêtée pour une condition de fonctionnement moyenne. On peut toutefois prévoir qu'il comprenne un diaphragme déformable, tel celui 210a du goulot 21a figure 5. Ainsi, chaque goulot pourra être défini par une membrane ou plaque dont on utilisera la déformation élastique ou commandé par un mécanisme pour connaître ou adapter à cet endroit le mouvement du fluide s'écoulant de la turbine concernée. En faisant ainsi varier la section de passage du goulot concerné, on favorisera une régulation de l'alimentation en liquide de la partie supérieure de chaque bassin latéral 15a,15b. Utiliser une poche annulaire gonflable, par un fluide gazeux, et dégonflable ou pouvant être plus ou moins remplie sous pression d'un fluide est envisageable.

Si la présence de clapets anti-retour 29a,29b à l'endroit des communications entre les parties supérieures des bassins latéraux et la chambre intermédiaire 17 sera de préférence optionnelle, il sera a priori utile d'en disposer (voir 31a,31b) à l'endroit des communications basses 25a,25b entre les parties inférieures des bassins latéraux et la chambre intermédiaire. On aura compris que tout clapet anti-retour s'ouvrira dans le sens du flux de liquide principal (quand la structure s'incline dans un sens) et se fermera en sens inverse, pour éviter, ou limiter, le reflux si tout le liquide ne s'est pas écoulé à l'écart de cette zone entre temps. En pratique il s'agira de préférence de volets à basculement libre.

Dans ce qui précède la chambre 17 est un caisson non subdivisé intérieurement. On pourra toutefois considérer comme utile, pour canaliser les flux de liquide de prévoir une cloison 35 longitudinale dressée dans la chambre 17. La cloison 35 séparera alors la chambre en un premier et un deuxième conduits 37a,37b de circulation du liquide entre les bassins latéraux, comme figures 6,7.

De préférence, sensiblement sous chaque goulot 21a,21b sera situé un diffuseur, ici incurvé, 33b. Chaque diffuseur comprend, dans ladite partie inférieure 152a ou 152b, une paroi latérale 330 (figure 2) de guidage du flux dont l'ouverture correspond à la communication correspondante, telle 25b figure 2, de sortie de liquide.

Figure 4, un circuit additionnel de fluide gazeux est prévu et fonctionne comme suit : Les volume de fluide gazeux (tel de l'air) dans les parties supérieures 150a,150b des bassins latéraux, au-dessus du niveau 42 de liquide de travail dans ces bassins, sont mis en communication par un conduit 43 qui s'étend entre eux, le long de la chambre 17 dont il est séparé par une cloison 44. Quand, à un temps de basculement, l'un des bassins latéraux descend et se remplit de liquide de travail, la hausse du niveau de liquide dans la partie supérieure 150a comprime le fluide gazeux qui le surmonte et qui donc s'échappe par le conduit 43 (flèche 40). Ce fluide atteint alors l'autre partie supérieure 150b où il va contribuer à faire baisser le niveau 42 dans cette partie. Ceci peut fonctionner avec tous les modes de réalisation précédents à surface libre.

Si des turbines 11a,11b sont prévues, l'effet qu'aura leur fonctionnement sur le comportement en oscillation de la structure 1 sera de préférence piloté en déphasage par le prélèvement plus ou moins important d'énergie à travers ces turbines, via l'(les) alternateur(s) 13a,13b et leur système de régulation, et ce quel que soit le niveau de fluide dans la chambre intermédiaire. L'importance de la charge prélevée dépendra alors par exemple de la puissance tirée du(des) alternateur(s) et/ou de la vitesse de rotation des turbines.

Pour favoriser le contrôle de l'oscillation du navire, voire son amortissement, on limitera volontairement la production d'énergie par les turbines et/ou alternateur(s), via le pilotage commandé de ces turbines et/ou alternateur(s). Ainsi, on pourra tendre vers une situation où, au moment où la vague atteint son amplitude maximale sur le côté tribord du navire par exemple, le navire sera à plat (amplitude nulle) et le fluide 18 entièrement sur tribord (amplitude maximum négative).

A l'entrée des enroulements en spirale, on aura encore pu noter figure 1, les rampes de biais 39a,39b qui élèvent l'admission de liquide jusqu'au niveau des parties supérieures 150a,150b

Les clapets anti-retour 31a,31b sont ici à leur niveau.

Comme on le comprend avec les figures 1,4,5, la chambre 17 et les bassins latéraux présentent un fond 171 situé sensiblement au même niveau, quand le dispositif est à l'horizontal. On gagne en encombrement.

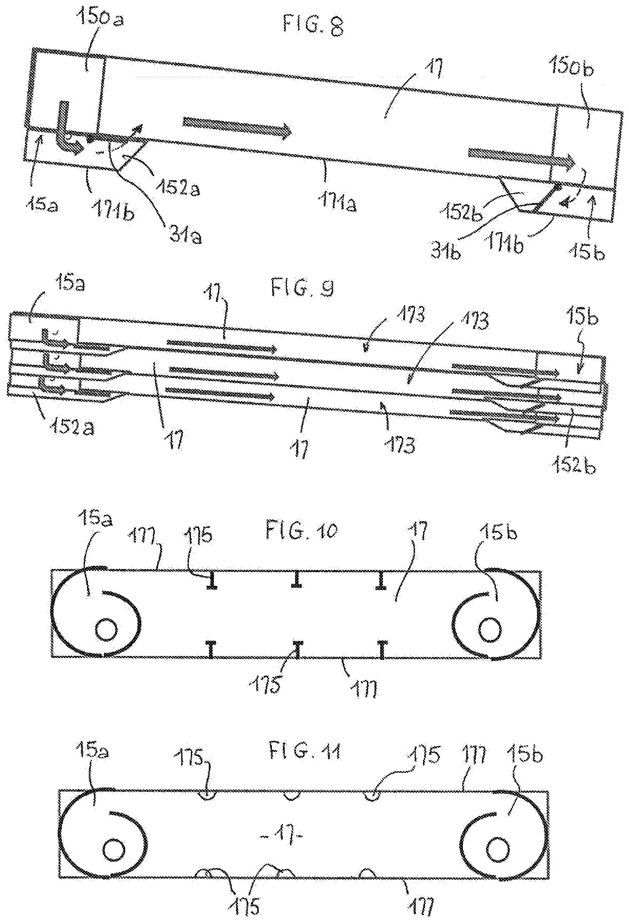

L'alternative de la figure 8 montre une solution où, quand le dispositif est à l'horizontal, le premier niveau où est situé le fond 171a de la chambre 17 est plus haut que le second niveau où est situé le fond 171b des bassins latéraux, de sorte que le liquide remonte pour passer de la partie inférieure d'un dit bassin latéral dans la chambre 17. La partie inférieure 152a,152b des bassins latéraux peut alors être une pièce à part qui vient se rapporter à la caisse stabilisatrice formée de la chambre 17 et des parties supérieures 150a,150b des bassins. Elle peut en particulier avoir une forme calculée pour limiter les pertes de charges, en forme de divergent vers le clapet aval. Ce mode de réalisation permet de simplifier la construction et d'augmenter l'efficacité du volume d'eau en effet stabilisant, et en performance énergétique si nécessaire.

La figure 9 vise à montrer que le dispositif peut comporter plusieurs bassins 173 superposés comprenant chacun une chambre 17 et les deux bassins latéraux associés 15a,15b

Quant aux figures 10,11, elles visent à schématiser la présence d'appendices saillants 175 en face interne des parois latérales 177 dressées de la chambre 17. Ces appendices peuvent s'élever sur toute la hauteur desdites parois.

Il peut s'agir de bourrelets de section profilée et symétrique ou de raidisseurs verticaux en T, en L ou simplement plats.

On en attend un effet d'accélération du liquide avec réduction de perte de charge Ceci doit aider à ajuster la période propre du bassin en permettant d'augmenter artificiellement la longueur d'onde de résonance de la surface libre, sans créer de déphasage supplémentaire. La contrepartie doit être une réduction du moment amortissant car moins d'eau circule dans les bassins latéraux.

Dans le cas où les turbines 11a,11b seront présentes, on pourra prévoir que l'effet du dispositif 1 sur le comportement en rotation du navire (parallèlement à l'axe 17a, et donc perpendiculairement à l'axe longitudinal 5 sur la figure 1), soit piloté, de préférence en déphasage, par le prélèvement plus ou moins important d'énergie à travers les turbines 11a,11b, via l'(les) alternateur(s) 13a,13b schématisé figure 1 et leur système de régulation, et ce quel que soit le niveau de fluide dans la chambre intermédiaire.

L'effet sur l'oscillation du navire variera en fonction de l'importance de la charge prélevée.

Pour favoriser le contrôle de l'oscillation du navire, voire son amortissement, on limitera volontairement la production d'énergie par les turbines et/ou alternateur(s), via le pilotage commandé de ces turbines et/ou alternateur(s). Ainsi, on pourra tendre vers une situation où, au moment où la vague atteint son amplitude maximale sur le côté tribord du navire par exemple, le navire sera à plat (amplitude nulle) et le fluide 18 entièrement sur tribord ; côté 7a sur les figures (amplitude maximum négative).

Comme schématisé, le pilotage de l'énergie mécanique générée par la turbine ou de l'énergie électrique produite par l'alternateur sera alors assuré (au moins principalement) non pas en régulant le débit du liquide de travail et/ou par pilotage des clapets (...29b...31b), mais par des moyens électrotechniques de pilotage 41 permettant de favoriser la stabilité du navire, quant à son basculement, par rapport à la production électrique de l'alternateur ou mécanique de la turbine considérée.

Par souci de performance et d'efficacité, il est proposé que ces moyens électrotechniques de pilotage de l'énergie mécanique générée par la turbine comprennent l'un au moins parmi :
- des moyens 45 pour faire varier la vitesse de rotation de la turbine,
- des moyens 47 pour faire varier la puissance produite par l'alternateur, ou l'un des paramètres électriques (telle la tension) qui la détermine.

Comme schématisé figure 2, les moyens 45 seront favorablement couplés avec l'arbre de liaison entre la turbine et l'alternateur (111 figure 2).

Ces moyens 45/47 de pilotage pourront par exemple inclure des batteries et/ou des moyens de basculement automatique de l'alternateur sur le réseau électrique du navire pour créer une augmentation brutale de la demande, si une régulation de l'équilibre du navire est requise (typiquement un décalage de phase dans le dispositif 1 par rapport à la période de rotation imposée au navire par la houle). Ainsi, très rapidement, l'énergie correspondante va être prélevée sur l'énergie cinétique stockée dans les masses tournantes. Ceci va entrainer une diminution de la vitesse de rotation de ces unités, au bénéfice d'une variation possible du débit d'écoulement du fluide de travail. Une mise en rotation plus ou moins libre de l'arbre 111 est aussi possible, par un freinage plus ou moins effectif.

Le pilotage, ou contrôle, de la « charge » ou puissance prélevée par la génératrice (turbine) pourra aussi être réalisé par un automate qui pilotera à haute fréquence l'ouverture et la fermeture du circuit électrique de la turbine. Le rapport « Temps de fermeture/Temps écoulé » se nomme rapport cyclique et est très utilisé par les concepteurs de gestion de puissance. Ce rapport est compris entre 0 et 1. Quand il est voisin de 1 : beaucoup de courant passe et donc beaucoup de puissance, ce qui a pour effet de freiner la turbine. On peut passer électroniquement de 0 à 1, par des bascules, l'effet étant quasi immédiat sur la vitesse de rotation de la turbine.

Même si agir directement sur l'arbre 111 de la turbine, via une boite de vitesse électronique, ou tout autre moyen électromécanique appartenant aux moyens 45, est donc possible, cette dernière solution est moins complexe que ce qui précède et donc d'une fiabilité supérieure, a priori.

Si la turbine est couplée au générateur électrique via une boîte de vitesse, on pourra aussi typiquement agir dessus par un circuit électronique.

Concernant les générateurs 13a,13b, il est possible que ce soient des machines synchrones, de manière que la vitesse de rotation de leur rotor soit variable, par action sur eux des moyens de pilotage 47.

On pourra en particulier piloter la vitesse de rotation en intervenant sur un nombre de paire de pôle, sur un glissement du moteur (moteur à bague) et/ou sur une fréquence du réseau électrique général du navire auquel le générateur sera couplé ; voire liaison 49 figure 2.

## Revendications

1. Dispositif agissant sur une structure adaptée à basculer d'un premier bord sur un deuxième bord opposé, le dispositif comprenant :
- au moins une chambre intermédiaire (17,170a,170b) qui est allongée entre les premier et deuxième bords,
- un premier et un deuxième bassins latéraux (15a,15b) communiquant avec la (les) chambre(s) intermédiaire(s) pour assurer des entrées et sorties de liquide (18), les bassins latéraux comprenant chacun une paroi (19) qui les délimitent extérieurement et étant situés vers deux extrémités de la chambre intermédiaire,
- chaque bassin latéral comprenant :
-- une partie supérieure (150a,150b) disposée de manière qu'elle reçoive le liquide sensiblement dans l'alignement de la direction (17a,17a1,17b1) d'allongement de la chambre intermédiaire qui l'alimente,
-- et une partie inférieure (152a,152b) qui communique (en 21a,21b) avec la partie supérieure, chacune des parties supérieure et inférieure communiquant avec la (les) chambre(s) intermédiaire(s) pour les entrées et sorties de liquide,
**caractérisé en ce que**
- chaque communication entre la partie supérieure du bassin latéral correspondant (15a,15b) et la chambre intermédiaire est située de sorte que le liquide canalisé par la chambre intermédiaire (17,170a,170b) :
-- entre dans ledit bassin latéral essentiellement tangentiellement à la partie de paroi (19) qui délimite extérieurement ce bassin latéral, à l'entrée dudit bassin,
-- et tourbillonne ainsi autour d'un axe vertical (110a,110b), en s'évacuant vers la partie inférieure dudit bassin.

2. Dispositif selon la revendication 1, dans lequel les communications entre les parties inférieures (152a,152b) des bassins latéraux et la chambre intermédiaire sont pourvues de clapets anti-retour (31a,31b).

3. Dispositif selon l'une des revendications précédentes, où la chambre intermédiaire (17,170a,170b) présente des parois latérales dressées (177) pourvues d'appendices saillants (175) situés en face interne desdites parois latérales, en contact avec le liquide.

4. Dispositif selon l'une des revendications précédentes, où la chambre intermédiaire (17,170a,170b) et les bassins latéraux présentent un fond (171) situé sensiblement au même niveau, quand le dispositif est à l'horizontal.

5. Dispositif selon l'une des revendications 1 à 3 où, quand le dispositif est à l'horizontal :
- la chambre intermédiaire (17,170a,170b) présente un fond (171a) situé à un premier niveau,
- les bassins latéraux présentent chacun un fond (171b) situé à un second niveau,
- et le premier niveau est situé plus haut que le second niveau, de sorte que le liquide remonte pour passer de la partie inférieure (152a,152b) d'un dit bassin latéral dans la chambre intermédiaire.

6. Dispositif selon l'une des revendications précédentes, dans lequel :
- les parties supérieure et inférieure (150a,150b,152a,152b) de chaque bassin latéral communiquent entre elles par un goulot (21a,21b), lequel comprend de préférence un diaphragme déformable ou réglable, et/ou :
- les parties supérieure et inférieure (150a,150b,152a,152b) de chaque bassin latéral communiquent entre elles par un goulot (21a,21b) sensiblement sous lequel est situé un diffuseur (33,33b) qui, dans ladite partie inférieure, comprend une paroi latérale de guidage du flux ayant une ouverture dirigée vers la communication correspondante de sortie de liquide depuis cette partie inférieure vers la chambre intermédiaire.

7. Dispositif selon l'une des revendications précédentes dans lequel chaque paroi (19) qui délimite extérieurement le bassin latéral correspondant est, au moins vers l'entrée, enroulée sensiblement en spirale autour dudit axe vertical (110a,110b), quand le dispositif est à l'horizontal.

8. Dispositif selon l'une des revendications précédentes, qui, pour une production d'énergie sur la structure, comprend au moins une première et une deuxième turbines (11a,11b) disposées dans la partie supérieure (150a,150b) des premier et un deuxième bassins latéraux (15a,15b), respectivement, chaque turbine (11a,11b) étant de préférence une turbine présentant un axe vertical, structure au repos.

9. Dispositif selon la revendication 8 :
- où, sur un navire, ledit liquide est un liquide de travail pouvant circuler sur le navire suivant un chemin, en générant un couple de rappel afin de compenser un effet de vagues ou de houle sur ledit navire,
- et qui comprend :
-- au moins un alternateur (13a,13b) lié fonctionnellement aux turbines,
-- et des moyens électrotechniques (41) de pilotage de l'énergie mécanique générée par la turbine ou de l'énergie électrique produite par l'alternateur, de façon à pouvoir favoriser la stabilité du navire, au moins vis-à-vis dudit basculement, par rapport à la production électrique de l'alternateur ou mécanique de la turbine.

10. Dispositif selon l'une des revendications précédentes, dans lequel :
- la chambre intermédiaire est partiellement remplie d'un liquide (18) à surface libre,
- et un circuit additionnel de fluide gazeux (40) relie les premier et un deuxième bassins latéraux (15a,15b), sans communication avec le fluide gazeux présent au-dessus de la surface libre de la chambre intermédiaire.

11. Procédé agissant sur une structure subissant au moins un mouvement d'inclinaison d'un bord sur un autre bord, **caractérisé en ce qu'**à bord de la structure, dans au moins une chambre intermédiaire allongée (17,170a,170b), centrée suivant une direction d'allongement, on fait circuler un liquide pour l'amener vers l'un et l'autre desdits bords (7a,7b), dans des premier et deuxième bassins latéraux (15a,15b) qu'on alimente par des canaux d'entrée (23a,23b) respectivement situés sensiblement dans l'alignement de la direction (17a,17a1,17b1) d'allongement de la chambre intermédiaire, le liquide entrant dans chaque bassin latéral essentiellement tangentiellement à la partie de paroi (19) qui délimite extérieurement ce bassin latéral, à l'entrée dudit bassin, et tourbillonnant ainsi autour d'un axe vertical (110a,110b), en s'évacuant.

12. Procédé selon la revendication 11, dans lequel :
- vers chacune des extrémités que la chambre intermédiaire présente suivant sa direction d'allongement, on dispose une partie supérieure de bassin latéral (15a,15b) avec lequel la chambre intermédiaire communique pour l'alimenter en liquide,
- et on fait ensuite s'évacuer ce liquide de nouveau vers ladite chambre intermédiaire à travers un goulot (21a,21b) séparant ladite partie supérieure alimentée en liquide d'une partie inférieure (152a,152b) dudit bassin latéral.

13. Procédé selon la revendication 12, dans lequel on crée un vortex dans le bassin latéral (15a,15b) correspondant, lors du passage du liquide entre les parties supérieure et inférieure de ce bassin.

14. Procédé selon l'une des revendications 11 à 13,, dans lequel en faisant circuler le liquide vers l'un et l'autre desdits bords (7a,7b), on l'amène respectivement vers une première et une seconde turbines (11a,11b) disposées là, pour une production d'énergie sur la structure.

15. Structure flottante (1) comprenant le dispositif (3) selon l'une des revendications 1 à 10, ou sur lequel est appliqué le procédé de l'une des revendications 11 à 14.

## Patentansprüche

1. Vorrichtung, die auf eine Struktur einwirkt, die dazu geeignet ist, von einem ersten Rand zu einem entgegengesetzten zweiten Rand zu kippen, wobei die Vorrichtung enthält:
- zumindest eine Zwischenkammer (17, 170a, 170b), die zwischen dem ersten und dem zweiten Rand langgestreckt verläuft,
- ein erstes und ein zweites seitliches Becken (15a, 15b), die mit der bzw. den Zwischenkammern in Verbindung stehen, um Flüssigkeitseinlässe und -auslässe (18) sicherzustellen, wobei die seitlichen Becken jeweils eine Wand (19) aufweisen, von der sie außen begrenzt werden und die sich in Richtung von zwei Enden der Zwischenkammer befinden,
- wobei jedes seitliche Becken enthält:
-- einen oberen Abschnitt (150a, 150b), der so angeordnet ist, dass er die Flüssigkeit im Wesentlichen fluchtend mit der Erstreckungsrichtung (17a, 17a1, 17b1) der Zwischenkammer aufnimmt, die sie zuführt,
-- und einen unteren Abschnitt (152a, 152b), der mit dem oberen Abschnitt in Verbindung steht (bei 21a, 21b), wobei jeder aus oberem und unterem Abschnitt mit der bzw. den Zwischenkammer(n) für die Flüssigkeitseinlässe und -auslässe in Verbindung steht,
**dadurch gekennzeichnet, dass**
jede Verbindung zwischen dem oberen Abschnitt des entsprechenden seitlichen Beckens (15a, 15b) und der Zwischenkammer so angeordnet ist, dass die Flüssigkeit, die durch die Zwischenkammer (17, 170a, 170b) geleitet wird
-- in das seitliche Becken im wesentlichen tangential zu dem Wandabschnitt (19) eintritt, der dieses seitliche Becken am Einlass des Beckens außen begrenzt,
-- und somit um eine vertikale Achse (110a, 110b) herum wirbelt und dabei zum unteren Abschnitt des Beckens abläuft.

2. Vorrichtung nach Anspruch 1, wobei die Verbindungen zwischen den unteren Abschnitten (152a, 152b) der seitlichen Becken und der Zwischenkammer mit Rückschlagventilen (31a, 31b) versehen sind.

3. Vorrichtung nach einem der vorangehenden Ansprüche, wobei die Zwischenkammer (17, 170a, 170b) aufgestellte Seitenwände (177) aufweist, die mit vorspringenden Fortsätzen (175) versehen sind, die sich an der Innenseite der Seitenwände in Kontakt mit der Flüssigkeit befinden.

4. Vorrichtung nach einem der vorangehenden Ansprüche, wobei die Zwischenkammer (17, 170a, 170b) und die seitlichen Becken einen Boden (171) aufweisen, der im Wesentlichen auf gleicher Höhe liegt, wenn die Vorrichtung in der Horizontalen ist.

5. Vorrichtung nach einem der Ansprüche 1 bis 3, wobei dann, wenn die Vorrichtung in der Horizontalen ist,
- die Zwischenkammer (17, 170a, 170b) mit ihrem Boden (171a) auf einer ersten Höhe liegt,
- die seitlichen Becken mit ihrem jeweiligen Boden (171b) auf einer zweiten Höhe liegen,
- und die erste Höhe höher liegt als die zweite Höhe, so dass die Flüssigkeit ansteigt, um von dem unteren Abschnitt (152a, 152b) eines seitlichen Beckens in die Zwischenkammer zu gelangen.

6. Vorrichtung nach einem der vorangehenden Ansprüche, wobei
- der obere und der untere Abschnitt (150a, 150b, 152a, 152b) eines jeden seitlichen Beckens über eine Engstelle (21a, 21b) miteinander in Verbindung stehen, die vorzugsweise eine verformbare oder einstellbare Membran aufweist, und/oder
- der obere und der untere Abschnitt (150a, 150b, 152a, 152b) eines jeden seitlichen Beckens über eine Engstelle (21a, 21b) miteinander in Verbindung stehen, etwa unter der ein Diffusor (33, 33b) liegt, der bei dem unteren Abschnitt eine seitliche Führungswand zum Führen der Strömung enthält, die eine Öffnung aufweist, die zur entsprechenden Verbindung zum Auslass der Flüssigkeit von diesem unteren Abschnitt zur Zwischenkammer gerichtet ist.

7. Vorrichtung nach einem der vorangehenden Ansprüche, wobei jede Wand (19), die das entsprechende seitliche Becken außen begrenzt, zumindest zum Einlass hin im Wesentlichen spiralförmig um die vertikale Achse (110a, 110b) gewickelt ist, wenn die Vorrichtung in der Horizontalen ist.

8. Vorrichtung nach einem der vorangehenden Ansprüche, die für die Erzeugung von Energie auf die Struktur zumindest eine erste und eine zweite Turbine (11a, 11b) enthält, die in dem oberen Abschnitt (150a, 150b) des ersten und des zweiten seitlichen Beckens (15a, 15b) angeordnet sind, wobei jede Turbine (11a, 11b) vorzugsweise eine Turbine mit einer in Ruhestellung der Struktur vertikalen Achse ist.

9. Vorrichtung nach Anspruch 8, wobei
bei einem Schiff die Flüssigkeit eine Arbeitsflüssigkeit ist, die entlang einer Wegstrecke auf dem Schiff strömen kann, indem sie ein Rückstellmoment erzeugt, um einen Wellen- oder Wellengangeffekt auf dem Schiff auszugleichen,
und sie enthält:
-- zumindest einen Wechselstromgenerator (13a, 13b), der funktional mit den Turbinen verbunden ist,
-- und elektrotechnische Einrichtungen (41) zum Steuern der von der Turbine erzeugten mechanischen Energie oder der von dem Wechselstromgenerator erzeugten elektrischen Energie, so dass die Stabilität des Schiffes zumindest hinsichtlich Verkippen in Bezug auf die elektrische Erzeugung des Wechselstromgenerators oder die mechanische Erzeugung der Turbine begünstigt werden kann.

10. Vorrichtung nach einem der vorangehenden Ansprüche, wobei
- die Zwischenkammer teilweise mit einer Flüssigkeit (18) mit freier Oberfläche gefüllt ist,
- und ein zusätzlicher Kreislauf von gasförmigem Fluid (40) das erste und das zweite seitliche Becken (15a, 15b) ohne Verbindung mit dem oberhalb der freien Oberfläche der Zwischenkammer vorhandenen gasförmigen Fluid verbindet.

11. Verfahren zum Einwirken auf eine Struktur, die zumindest eine Kippbewegung von einem Rand zum anderen Rand erfährt, **dadurch gekennzeichnet, dass** an Bord der Struktur in zumindest einer langgestreckten Zwischenkammer (17, 170a, 170b), die in einer Erstreckungsrichtung zentriert ist, eine Flüssigkeit umgewälzt wird, um sie an den einen und anderen der Ränder (7a, 7b) zu bringen, und zwar in einem ersten und einem zweiten seitlichen Becken (15a, 15b), die durch Einlasskanäle (23a, 23b) gespeist werden, die jeweils im wesentlichen in Flucht mit der Erstreckungsrichtung (17a, 17a1, 17b1) der Zwischenkammer liegen, wobei die Flüssigkeit in jedes seitliche Becken im Wesentlichen tangential zu dem Wandabschnitt (19), der dieses seitliche Becken außen begrenzt, am Einlass des Beckens eintritt und somit um eine vertikale Achse (110a, 110b) herum wirbelt und dabei abläuft.

12. Verfahren nach Anspruch 11, wobei
- zu jedem der Enden hin, die die Zwischenkammer in ihrer Erstreckungsrichtung aufweist, ein oberer Abschnitt des seitlichen Beckens (15a, 15b) angeordnet wird, mit welchem die Zwischenkammer in Verbindung steht, um es mit Flüssigkeit zu speisen,
- dann diese Flüssigkeit erneut zur Zwischenkammer hin durch eine Engstelle (21a, 21b) abgelassen wird, die den mit Flüssigkeit gespeisten oberen Abschnitt von einem unteren Abschnitt (152a, 152b) des seitlichen Beckens trennt.

13. Verfahren nach Anspruch 12, wobei ein Wirbel in dem entsprechenden seitlichen Becken (15a, 15b) beim Überlaufen von Flüssigkeit zwischen dem oberen und dem unteren Abschnitt dieses Beckens erzeugt wird.

14. Verfahren nach einem der Ansprüche 11 bis 13, wobei beim Umwälzen von Flüssigkeit zum einen und zum anderen der Ränder (7a, 7b) hin, diese einer dort angeordneten ersten und zweiten Turbine (11a, 11b) zugeführt wird zum Erzeugen von Energie auf die Struktur.

15. Schwimmende Struktur (1) mit einer Vorrichtung (3) nach einem der Ansprüche 1 bis 10 oder bei der das Verfahren nach einem der Ansprüche 11 bis 14 durchgeführt wird.

## Claims

1. Device acting on a structure designed to tilt from a first edge to a second opposite edge, with the device comprising:
- at least one intermediate chamber (17,170a,170b) which is elongated between the first and second edges,
- a first side tank and a second side tank (15a, 15b) both communicating with the intermediate chamber(s) to manage liquid inputs and outputs (18), the side tanks each including a wall (19) which delimits said side tanks externally and being located towards two extremities of the intermediate chamber,
- with each side tank comprising:
-- an upper section (150a, 150b) positioned so that it receives the liquid in line with the elongation direction (17a, 17a1, 17b1) of the intermediate chamber which supplies it,
-- and a lower section (152a, 152b) which communicates (in 21a, 21b) with the upper section, with each of the upper and lower sections being in communication with the intermediate chamber(s) for the liquid inlets and outlets,
**characterised in that** each communication between the upper section of the corresponding side tank (15a, 15b) and the intermediate chamber is positioned so that the liquid channelled by the intermediate chamber (17, 170a, 170b):
-- enters said side tank tangentially to a part of the wall (19) which delimits the corresponding side tank externally, at the entry of said tank, and
-- so swirls around a vertical axis (110a, 110b), when said liquid is evacuated towards the lower section of said tank.

2. Device according to claim 1 in which communications between the lower sections (152a, 152b) of the side tanks and the intermediate chamber are equipped with non-return valves (31a, 31b).

3. Device according to one of the previous claims, wherein the intermediate chamber (17, 170a, 170b) includes side walls (177) with protruding accessories (175) situated on inner side of said side walls, in contact with the liquid.

4. Device according to one of the previous claims, wherein the intermediate chamber (17, 170a, 170b) and the side tanks comprise a base (171) situated at the same level, when the device is horizontal.

5. Device according to one of claims 1 to 3 wherein, when the device is horizontal:
- the intermediate chamber (17, 170a, 170b) includes a base (171a) positioned at a first level,
- the side tanks each have a base (171b) positioned at a second level,
- and the first level is situated higher than the second level so that the liquid rises to move from the lower section (152a, 152b) of said side tank to the intermediate chamber.

6. Device according to one of the previous claims wherein :
- the upper and lower sections (150a, 150b, 152a, 152b) of each side tank communicate with each other using a spout (21a, 21b) which preferably include a deformable diaphragm, and/or:
- the upper and lower sections (150a, 150b, 152a, 152b) of each side tank communicate with each other using a spout (21a, 21b) under which a diffuser is located (33, 33b) which, in said lower section, comprises a flow control side wall with an opening directed towards the corresponding liquid outlet communication from this lower section to the intermediate chamber.

7. Device according to one of the previous claims wherein each wall (19) which delimits the corresponding side tank externally is, at least towards the entry, wound in a coil around a vertical axis (110a, 110b), when the device is horizontal.

8. Device according to one of the previous claims which, for energy production on the structure, includes at least one first turbine and one second turbine (11a, 11b) both positioned in the upper section (150a, 150b) of the first and second side tanks (15a, 15b) respectively, each turbine (11a, 11b) preferably being a turbine with a vertical axis when the structure is at rest.

9. Device according to claim 8:
- wherein, on a ship, said liquid is a working liquid circulating around the ship following a path while generating a restoring torque for compensating effects of waves and swell on said ship,
- and which comprises:
-- at least one alternator (13a, 13b) connected functionally to the turbines,
-- and electrotechnical control means (41) for controlling the mechanical energy generated by the turbine or the electrical energy produced by the alternator, in order to be able to favour a stabilisation of the ship, at least relative to said tilting, with respect to the electrical production of the alternator or the turbine's mechanical production.

10. Device according to one of the previous claims, wherein:
- the intermediate chamber is partially filled with liquid (18) having a free surface,
- and an additional gaseous fluid circuit (40) connects the first and second side tanks (15a, 15b), without communication with the gaseous fluid situated above the free surface of the intermediate chamber.

11. Process acting on a structure subject to at least one tilting movement from one edge to another edge, **characterised by** the fact that, on board of the structure, in at least one elongated intermediate chamber (17, 170a, 170b) centred on the elongation direction, liquid is circulated to either of said edges (7a, 7b), in the first and second side tanks which are supplied by inlet channels (23a, 23b) respectively situated in line with the elongation direction (17a, 17a1, 17b1) of the intermediate chamber, with the liquid entering each side tank tangentially to the part of the wall (19) which delimits the corresponding side tank externally, at the entry of said tank, and so swirling around a vertical axis (110a, 110b), when said liquid is evacuated.

12. Process according to claim 11, wherein :
- towards each of the extremities of the intermediate chamber in the elongation direction, there is an upper section of the side tank (15a, 15b) with which the intermediate chamber communicates to supply it with liquid,
- and this liquid is then evacuated again towards said intermediate chamber through a spout (21a, 21b) separating said upper section supplied with liquid from a lower section (152a, 152b) of said side tank.

13. Process according to claim 12 wherein a vortex is created in the corresponding side tank (15a, 15b) during passage of the liquid between the upper and lower sections of the tank.

14. Process according to one of claims 11 to 13 wherein, by circulating the liquid to one and the other of said edges (7a, 7b), the liquid is taken to a first and a second turbines (11a, 11b) positioned there, for energy production on the structure.

15. A floating structure (1) comprising the device (3) according to one of claims 1 to 10 or to which the process in one of claims 11 to 14 is applied.
